(19)

**Europäisches Patentamt**
**European Patent Office**
**Office européen des brevets**

(11)  **EP 4 607 863 A1**

(12)  # EUROPEAN PATENT APPLICATION

(43) Date of publication:
**27.08.2025  Bulletin 2025/35**

(21) Application number: **25156192.4**

(22) Date of filing: **06.02.2025**

(51) International Patent Classification (IPC):
**H04L 25/03** $^{(2006.01)}$    **H04B 7/0456** $^{(2017.01)}$
**H04L 27/26** $^{(2006.01)}$

(52) Cooperative Patent Classification (CPC):
**H04L 27/2639; H04B 7/0456; H04L 25/03343;**
**H04L 25/03891;** H04L 2025/03624;
H04L 2025/03636

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.02.2024  IN 202411013648**
**21.01.2025  US 202519032931**

(71) Applicant: **Viavi Solutions Inc.**
**Chandler, AZ 85286 (US)**

(72) Inventors:
• **SATTARZADEH HASHEMI, Ata**
  **Guildford, GU1 3NA (GB)**
• **DIZDAR, Onur**
  **London, W4 3DF (GB)**
• **BATTULA, Venkateswara**
  **Chandler, AZ 85286 (US)**
• **WANG, Stephen**
  **London, SW6 6NG (GB)**

(74) Representative: **Murgitroyd & Company**
**165-169 Scotland Street**
**Glasgow G5 8PL (GB)**

(54)  **LOW COMPLEXITY PRECODER DESIGN FOR MULTI-USER MULTI-INPUT MULTI-OUTPUT ORTHOGONAL TIME AND FREQUENCY SPACE NETWORKS**

(57)    A device may apply a precoder to input information symbols to generate delay-Doppler (DD) domain symbols, and may utilize an inverse symplectic finite Fourier transform to transform the DD domain symbols into a time-frequency (TF) domain signal. The device may utilize a Heisenberg transform to convert the TF domain signal to a time domain signal, and may add a cyclic prefix to the time domain signal to generate a modified time domain signal. The device may transmit the modified time domain signal to at least one user equipment.

100

**FIG. 1A**

EP 4 607 863 A1

**Description**

FIELD

This disclosure relates to a method, device and non-transitory computer-readable medium for implementing a low complexity precoder design for multi-user multi-input multi-output orthogonal time and frequency space networks.

BACKGROUND

New waveform candidates, such as orthogonal time and frequency space (OTFS) waveforms, may be used to address current shortcomings of orthogonal frequency division multiplexing (OFDM) waveforms.

SUMMARY

According to an aspect, there is provided a method, comprising:

applying, by a device, a precoder to input information symbols to generate delay-Doppler, DD, domain symbols;
utilizing, by the device, an inverse symplectic finite Fourier transform to transform the DD domain symbols into a time-frequency, TF, domain signal;
utilizing, by the device, a Heisenberg transform to convert the TF domain signal to a time domain signal;
adding, by the device, a cyclic prefix to the time domain signal to generate a modified time domain signal; and
transmitting, by the device, the modified time domain signal to at least one user equipment.

In one embodiment, transmitting the modified time domain signal causes the at least one user equipment to convert the modified time domain signal to the TF domain signal and to convert the TF domain signal to the DD domain symbols.

In one embodiment, the precoder is a zero forcing and minimum mean square error based precoder for multi-user multi-input multi-output orthogonal time and frequency space in a DD domain based on a doubly block circulant property of a channel matrix.

In one embodiment, the precoder is a zero forcing and minimum mean square error based precoder for multi-user multi-input multi-output orthogonal time and frequency space in a time-frequency domain for a single-antenna receiver.

In one embodiment, the method further comprises converting the zero forcing and minimum mean square error based precoder to a DD domain.

In one embodiment, the precoder is a block diagonalization based precoder for multi-user multi-input multi-output orthogonal time and frequency space in a time-frequency domain for a multi-antenna receiver.

In one embodiment, the method further comprises converting the block diagonalization based precoder to a DD domain.

According to another aspect, there is provided a non-transitory computer-readable medium storing a set of instructions, the set of instructions comprising one or more instructions that, when executed by one or more processors of a device, cause the device to perform the method set out above.

In one embodiment, the inverse symplectic finite Fourier transform and the Heisenberg transform are provided in an orthogonal time and frequency space modulator of the device.

According to a further aspect, there is provided a device, comprising:

one or more memories; and
one or more processors, coupled to the one or more memories, configured to:

apply a precoder to input information symbols to generate delay-Doppler, DD, domain symbols;
utilize an inverse symplectic finite Fourier transform to transform the DD domain symbols into a time-frequency, TF, domain signal;
utilize a Heisenberg transform to convert the TF domain signal to a time domain signal;
add a cyclic prefix to the time domain signal to generate a modified time domain signal; and
transmit the modified time domain signal to at least one user equipment to cause
the at least one user equipment to convert the modified time domain signal to the TF domain signal and to convert
the TF domain signal to the DD domain symbols.

In one embodiment, the inverse symplectic finite Fourier transform and the Heisenberg transform are provided in an orthogonal time and frequency space modulator of the device.

In one embodiment, the device is a radio access network.

In one embodiment, the precoder provides a zero forcing precoding scheme.

In one embodiment, the precoder provides a minimum mean square error precoding scheme.

In one embodiment, the minimum mean square error precoding scheme includes a zero forcing precoding scheme and a maximum ratio transmission precoding scheme.

In one embodiment, the device is a multi-user multi-input multi-output, MIMO, orthogonal time and frequency space, OTFS, system or a single-user MIMO OTFS system.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

BRIEF DESCRIPTION OF THE DRAWINGS

Figs. 1A-1H are diagrams of an example associated with applying zero-forcing (ZF) and minimum mean square error (MMSE) or any other linear precoder to multi-user multi-input multi-output (MU-MIMO) OTFS networks.

Fig. 2 is a diagram of an example environment in which systems and/or methods described herein may be implemented.

Fig. 3 is a diagram of example components of one or more devices of Fig. 2.

Fig. 4 is a flowchart of an example process for applying ZF and MMSE to MU-MIMO OTFS networks.

DETAILED DESCRIPTION

The following detailed description of example implementations refers to the accompanying drawings. The same reference numbers in different drawings may identify the same or similar elements.

OFDM is a widely used waveform in wireless communication systems due to high spectral efficiency, robustness to multipath fading, and simple implementation of channel equalization. However, OFDM has several drawbacks, such as a high peak-to-average power ratio (PAPR), where the peak power can be much higher than the average power. This may require use of highly linear power amplifiers, which are less power-efficient and can lead to increased power consumption and reduced battery life in mobile devices. OFDM is sensitive to frequency offset and Doppler shift, which can cause inter-carrier interference (ICI). OFDM utilizes a cyclic prefix to combat inter-symbol interference (ISI) due to multipath propagation. The cyclic prefix may reduce the overall spectral efficiency of an OFDM waveform. Furthermore, synchronization of OFDM systems, particularly time and frequency synchronization, can be complex and challenging. OFDM also requires accurate channel estimation to equalize channel effects. OFDM includes significant out-of-band emissions, which can cause interference with adjacent channels. In environments with significant delay spread, performance of OFDM may be negatively impacted due to loss of orthogonality between subcarriers. Therefore, current techniques for generating OFDM waveforms consume computing resources (e.g., processing resources, memory resources, communication resources, and/or the like), networking resources, and/or the like associated with increasing power consumption, reducing battery life, handling inter-carrier interference, reducing spectral efficiency, generating a degraded quality signal, and/or the like.

Some implementations described herein relate to a radio access network (RAN) that applies ZF and MMSE to MU-MIMO OTFS networks. For example, the RAN may apply a precoder to input information symbols to generate delay-Doppler (DD) domain symbols, and may utilize an inverse symplectic finite Fourier transform to transform the DD domain symbols into a time-frequency (TF) domain signal. The RAN may utilize a Heisenberg transform to convert the TF domain signal to a time domain signal, and may add a cyclic prefix to the time domain signal to generate a modified time domain signal. The RAN may transmit the modified time domain signal to at least one user equipment.

In this way, the RAN applies ZF and MMSE to MU-MIMO OTFS networks. For example, a RAN may apply ZF and/or MMSE models to beamforming techniques for MU-MIMO OTFS systems. Although the models are described in connection with MU-MIMO, the models may also be used in single user MIMO (SU-MIMO) OTFS. In a ZF precoding scheme for OTFS, a precoder for each antenna and each user may be designed to cancel out total interference to the other users. An MMSE precoder for OTFS may incorporate benefits of maximum ratio transmission (MRT) and ZF precoding schemes considering both signal and interference levels to achieve a robust performance. A transformation may be utilized to diagonalize an effective channel matrix of the system, and a precoding design may be performed accordingly. Alternatively, beamformers may be calculated and applied in the time-frequency (TF) domain rather than the DD domain. Thus, the RAN conserves computing resources, networking resources, and/or the like that would otherwise have been consumed by increasing power consumption, reducing battery life, handling inter-carrier interference, reducing spectral efficiency, generating a degraded quality signal, and/or the like.

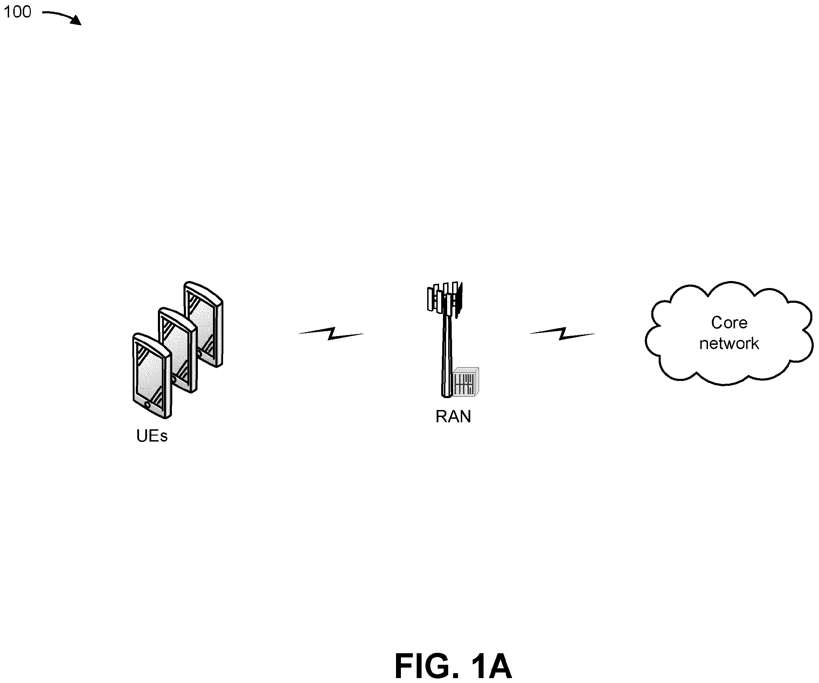

Figs. 1A-1H are diagrams of an example 100 associated with applying ZF and MMSE to MU-MIMO OTFS networks. As shown in Figs. 1A-1H, the example 100 may include user equipments (UEs) associated with a radio access network (RAN) and a core network. In some implementations, the UEs and the RAN may form an MU-MISO OTFS network, and the RAN may utilize ZF and MMSE precoding schemes. Further details of the UEs, the RAN, and the core network are provided elsewhere herein.

In some implementations, the following abbreviations may be used herein: additive white Gaussian noise (AWGN), broadcast channel (BC), cyclic prefix (CP), channel state information (CSI), channel state information at transmitter (CSIT), doubly block circulant (DBC), delay-Doppler (DD), degree-of-freedom (DoF), de-modulation reference signal (DMRS), discrete Zak transform (DZT), inter-carrier interference (ICI), inter-symbol interference (ISI), multi-input multi-output (MIMO), multi-input single-output (MISO), minimum mean square error (MMSE), maximum ratio transmission (MRT), multi-user multi-input multi-output (MU-MIMO), new radio (NR), symplectic finite Fourier transform (SFFT), signal-to-noise ratio (SNR), signal-to-interference-plus-noise ratio (SINR), single-user MIMO (SU-MIMO), time-frequency (TF), and zero forcing (ZF).

In some implementations, the following parameters may be used herein.

| Parameter | Definition |
|---|---|
| $N_t$ | Number of transmit antennas |
| K | Number of users |
| M | Number of bins in the delay domain |
| N | Number of bins in the Doppler domain |
| $\Delta f$ | Subcarrier spacing in OFDM conversion |
| $T_{OTFS}$ | Frame length before CP |
| P | Number of resolvable paths |
| $\boldsymbol{X}_{DD}$ | DD domain symbol matrix at transmitter |
| $X_{DD}$ | Vector form of DD domain symbol matrix at transmitter |
| $\boldsymbol{X}_{TF}$ | TF domain signal |
| $s(t)$ | Time-domain OTFS signal |
| $g_{tx}(t)$ | Transmitter pulse shaping filter |
| $h_{DD}(\tau,\nu)$ | Channel model in DD domain |
| $h_i$ | Complex channel coefficient of the i-th channel path |
| $\tau_i$ | Delay of i-th channel path |
| $\nu_i$ | Doppler shift of i-th channel path |
| $\tau_{max}$ | Maximum delay spread |
| $\nu_{max}$ | Maximum Doppler spread |
| $\boldsymbol{Y}_{DD}$ | DD domain symbol matrix at receiver |
| $Y_{DD}$ | Vector form of DD domain symbol matrix at receiver |
| $\boldsymbol{H}_{DD}$ | Channel matrix in DD domain |
| $\boldsymbol{H}_{DD}^{q,k}$ | Channel matrix in DD domain from q-th transmit antenna to user-$k$ |
| $\widehat{\boldsymbol{H}}_{DD}^{q,k}$ | Estimated channel matrix in DD domain from q-th transmit antenna to user-$k$ |
| $\Pi$ | Permutation matrix with forward cyclic shift |
| $\boldsymbol{F}_N$ | N-point discrete Fourier transform matrix |
| $\Delta$ | Diagonal matrix of phase compensation term |
| $\Gamma$ | Phase compensation term |

(continued)

| Parameter | Definition |
|---|---|
| $\boldsymbol{F}_{qk}$ | Precoder matrix in DD domain for q-th transmit antenna and user-*k* |
| $\boldsymbol{S}_{DD}$ | DD domain symbol matrix at transmitter before precoding |
| $\boldsymbol{S}_{TF}$ | TF domain symbol matrix at transmitter before precoding |
| $S_{DD}^{k}$ | DD domain symbol vector at transmitter intended for user-A: before precoding |
| $\hat{S}_{DD}^{k}$ | DD domain equalized symbol vector at user-*k* |
| $X_{DD}^{q}$ | DD domain symbol vector at transmitter fed to q-th transmit antenna after precoding |
| $\boldsymbol{F}_{qk}$ | Precoder matrix in DD domain for q-th transmit antenna and user-*k* |
| $Y_{DD}^{k}$ | DD domain symbol vector received at user-*k* |
| $\boldsymbol{Z^{k}}$ | DD domain noise matrix at user-*k* |
| $\widehat{\boldsymbol{R}}_{DD}^{q,k}$ | Estimate of DD domain symbol matrix transmitted from q-th transmit antenna and received by user-A: and estimated at the transmitter |
| $\widehat{R}_{DD}^{q,k}$ | Vector form of estimate of DD domain symbol matrix transmitted from q-th transmit antenna and received by user-A: and estimated at the transmitter |
| $\widehat{\boldsymbol{R}}_{TF}^{q,k}$ | Estimate of TF domain symbol matrix transmitted from q-th transmit antenna and received by user-A: and estimated at the transmitter |
| $\widehat{\boldsymbol{H}}_{TF}^{q,k}$ | Estimate of channel matrix in DD domain from q-th transmit antenna to user-A: |
| $\boldsymbol{\omega}_{m,n}^{MMSE}$ | MMSE precoding matrix in TF domain for the TF bin [*m, n*] |
| $\boldsymbol{\omega}_{m,n}^{ZF}$ | ZF precoding matrix in TF domain for the TF bin [*m, n*] |
| $\boldsymbol{W}_{qk}$ | Precoding matrix in TF domain for q-th transmit antenna and user-*k* |

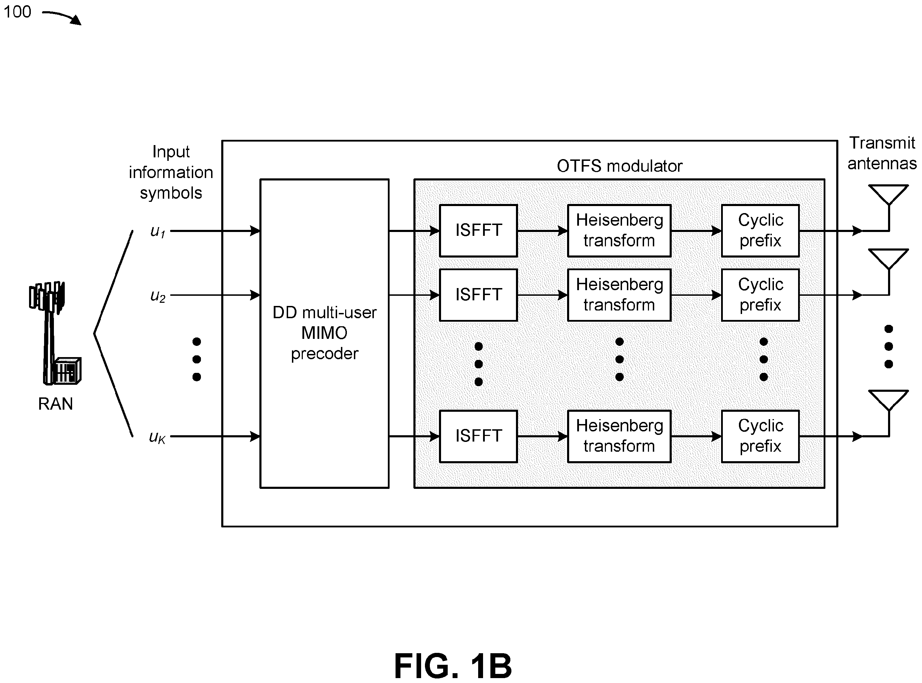

Fig. 1B is a diagram of example components of a RAN in which systems and/or methods described herein may be implemented. As shown in Fig. 1B, a multi-input single-output (MISO) broadcast setting may be implemented, where *K* single antenna users are served using $N_t$ antennas with $N_t \geq K$. As further shown in Fig. 1B, information symbols of different users ($u_1, u_2, ..., u_k$) may be provided to a precoder, where precoders may be applied to delay-domain symbols of the users. Delay-Doppler (DD) domain symbols may be modulated using an OTFS modulator. In Fig. 1B, an inverse symplectic finite Fourier transform (ISFFT) based modulation may be utilized. In the ISFFT based modulator, each OTFS grid has M bins in the delay and *N* bins in the Doppler dimensions. The total bandwidth (BW) used to transmit the OTFS symbols may be BW=$M \times \Delta f$, where $\Delta f$ is the subcarriers spacing used in the OFDM conversion (e.g., the Heisenberg transform) and the frame length before adding the cyclic prefix would be $T_{OTFS} = N \times T$, where $T = 1/\Delta f$. Further details of the components shown in Fig. 1B are provided elsewhere herein.

DD domain transmission schemes, such as an OTFS network, may include unique properties especially for high Doppler scenarios, and may be compatible with multiple antenna transmitters and receivers in order to increase spectral efficiency and performance of communication systems. An OTFS network may transmit data symbols in the DD domain, where a channel is quasi-static and sparse. In OTFS, transmitted symbols may be spread in the entire time and frequency domain, which enables the OTFS network to harvest full degrees of freedom of communication channels.

In some implementations, the RAN may apply beamforming techniques, such as ZF and MMSE precoding, to a MU-MIMO OTFS system. Although implementations are described in connection with MU-MIMO OTFS, the implementations may also be utilized in SU-MIMO OTFS with slight modifications. In a ZF precoding scheme for OTFS, a precoder for each antenna and each user may cancel out total interference to other users. The MMSE precoder for OTFS may include the benefits of MRT and ZF precoding schemes by considering both signal and interference levels. In some implementations, a mathematical transformation may be utilized to diagonalize an effective channel matrix of the RAN and to generate a precoding design accordingly. In some implementations, the RAN may apply the precoding in the time-frequency (TF) domain rather than the DD domain.

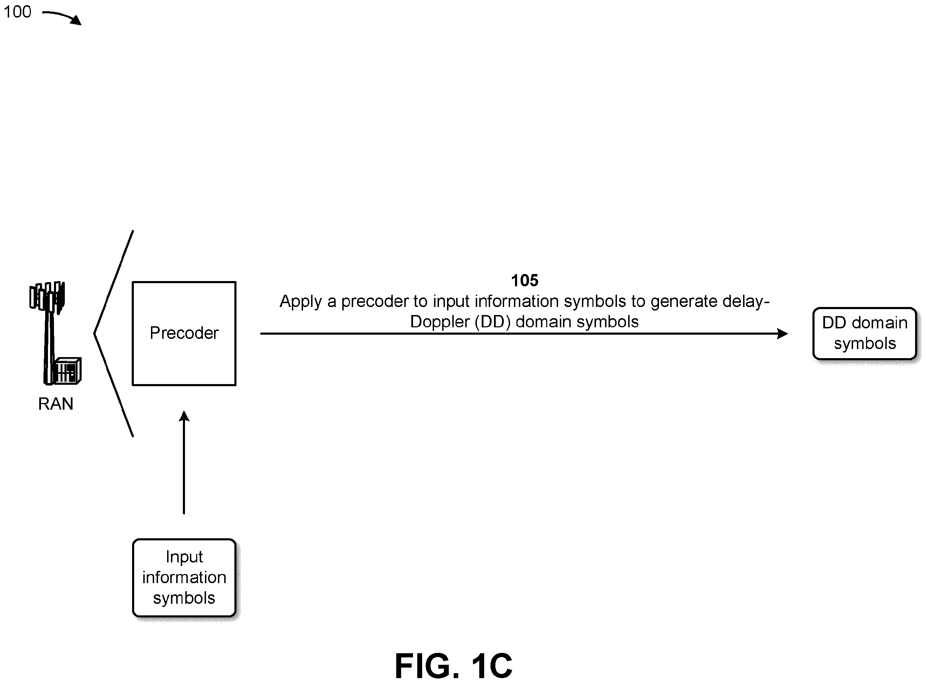

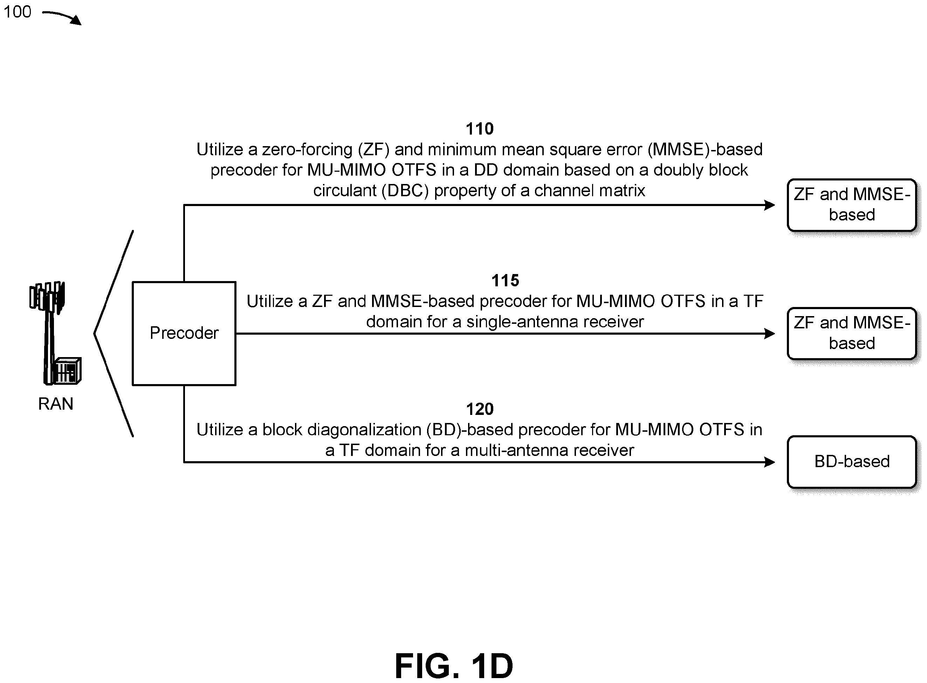

As shown in Fig. 1C, and by reference number 105, the RAN may apply a precoder to input information symbols to generate delay-Doppler (DD) domain symbols. For example, the RAN may apply one of the precoders, described below in connection with Fig. 1D, to the input information symbols to generate the DD domain symbols. The input information symbols may be provided for different users (e.g., UEs), and may be provided to one of the precoders. The one of the precoders may process the input information symbols to generate the DD domain symbols.

As shown in Fig. 1D, and by reference number 110, the RAN may utilize a ZF and MMSE based precoder for MU-MIMO OTFS in a DD domain based on a doubly block circulant (DBC) property of a channel matrix. For example, the RAN may utilize a low-complexity MU-MIMO precoding scheme, and perfect channel state information (CSI) may be available at the RAN. The RAN may include $N_t$ antenna capable of serving serve $K$ users, where $N_t \geq K$. A precoder matrix may be defined as $\boldsymbol{F}_{qk} \in \mathbb{C}^{MN \times MN}$, $q \in \{1, ..., N_t\}$ and $k \in \{1, ..., K\}$. A signal fed into a $q$th OTFS modulator connected to a $q$th antenna may be calculated as:

$$X_{DD}^q = \sum_{k=1}^K \boldsymbol{F}_{qk} S_{DD}^k, \qquad (1)$$

where $S_{DD}^k$ is the vectorized modulated input symbols for the kth user in the DD domain. A received DD domain signal for the kth user may be calculated as:

$$Y_{DD}^k = \sum_{q=1}^{N_t} \boldsymbol{H}_{DD}^{q,k} X_{DD}^q + Z^k$$

$$= \sum_{q=1}^{N_t} \sum_{k'=1}^{K} \boldsymbol{H}_{DD}^{q,k} \boldsymbol{F}_{qk'} S_{DD}^{k'} + Z^k$$

$$= \underbrace{\sum_{q=1}^{N_t} \boldsymbol{H}_{DD}^{q,k} \boldsymbol{F}_{qk} S_{DD}^k}_{\text{Desired Signal}} + \underbrace{\sum_{q=1}^{N_t} \sum_{\substack{k' \in \{1,...,K\} \\ k' \neq k}} \boldsymbol{H}_{DD}^{q,k} \boldsymbol{F}_{qk'} S_{DD}^{k'}}_{\text{Interference}} + \underbrace{Z^k}_{\text{noise}}. \qquad (2)$$

The RAN may obtain $\boldsymbol{F}_{qk}$ for MU-MIMO with low-complexity methods.

The RAN may utilize the properties of a DBC matrix. A DBC matrix can be decomposed as:

$$\boldsymbol{H}_{DD} = \Xi^{-1} \boldsymbol{\Delta} \Xi, \qquad (3)$$

where

$$\Xi = \mathbf{F}_M \otimes \mathbf{F}_N \qquad (4)$$

$$\boldsymbol{\Delta} = \text{diag}(\text{vec}(\mathbf{F}_N \mathbf{H}' \mathbf{F}_M)). \qquad (5)$$

Where $\Delta$ is a diagonal matrix composed of eigenvalues of a channel matrix $\boldsymbol{H}_{DD}$ and $\mathbf{H}' = \text{vec}_{N,M}^{-1}(h_1)$, with $h_1$ being the first column of the $\boldsymbol{H}_{DD}$.

A channel in a continuous DD domain may be modelled as:

$$h_{DD}(\tau, \nu) = \sum_{i=1}^{P} h_i \delta(\tau - \tau_i) \delta(\nu - \nu_i), \qquad (6)$$

where $P$ is an integer number showing a number of resolvable paths and $h_i$ is a complex number showing the channel coefficient of an $i$th path. Maximum values for delay and Doppler of each path may be restricted to a maximum delay spread and a maximum Doppler spread of the channel. Therefore, this provides $0 < \tau_i \leq \tau_{max}$ and $-\nu_{max} \leq \nu_i \leq +\nu_{max}$.

The relation between input and output signal in the OTFS may be provided in matrix form as follows:

$$Y_{DD} = H_{DD}X_{DD} + n. \qquad (7)$$

In this formulation, $Y_{DD}$ may be a vectorized version of a matrix $\boldsymbol{Y}_{DD}$, obtained by stacking up all the columns of $\boldsymbol{Y}_{DD}$ into a single column vector, where the matrix $\boldsymbol{Y}_{DD}$ is the matrix of received symbols in the DD domain matching the DD grid. This operation may be shown as vec(.) and a reverse operation may be shown as $\mathrm{vec}_{M,N}^{-1}(.)$. Therefore, $Y_{DD} = \mathrm{vec}(\boldsymbol{Y}_{DD}) \in \mathbb{C}^{MN \times 1}$ and $X_{DD} = \mathrm{vec}(\boldsymbol{X}_{DD}) \in \mathbb{C}^{MN \times 1}$. The last term $n \in \mathbb{C}^{MN \times 1}$ is a vector the additive white Gaussian noise (AWGN) with independent and identically distributed elements with distribution $\mathcal{CN}(0, \sigma^2)$. The elements of the channel matrix $\boldsymbol{H}_{DD} \in \mathbb{C}^{MN \times MN}$ may be dependent on channel coefficients defined in equation (6) and may capture the quasi-periodicity properties of the OTFS. Furthermore, the effects of the choice of a cyclic prefix and pulse shaping may be reflected in this matrix.

With the ideal pulse shaping satisfying bi-orthogonality conditions, $\boldsymbol{H}_{DD}$ may be a doubly block circulant (DBC) matrix with M circulant blocks $\boldsymbol{H}^i$ each of size $N \times N$ and may be expressed as:

$$H_{DD} = \begin{bmatrix} H^0 & H^{M-1} & \cdots & H^2 & H^1 \\ H^1 & H^0 & \cdots & H^3 & H^2 \\ \vdots & \vdots & \ddots & \vdots & \vdots \\ H^{M-2} & H^{M-3} & \cdots & H^0 & H^{M-1} \\ H^{M-1} & H^{M-2} & \cdots & H^1 & H^0 \end{bmatrix}. \qquad (8)$$

This is the channel matrix model that is used for the ZF and MMSE based precoder.

The diagonalization method may provide a basis for the ZF and MMSE based precoder. The channel matrix model of equation (8), $\boldsymbol{H}_{DD}$, may include off diagonal elements. This may indicate that each symbol of $X_{DD}$ can potentially induce interference across multiple output symbols within $Y_{DD}$, resulting in inter-symbol interference (ISI) and intercarrier interference (ICI). Consequently, by transforming the channel matrix into a diagonal form, the RAN may mitigate the ISI and ICI interference effectively. This transformation may simplify the relationship between input and output of the channel to a single coefficient. Hence, employing a one-tap equalizer may become feasible for signal detection. Furthermore, ZF and MMSE precoding techniques can be applied to the transformed diagonal channel.

When channel feedback is available at the RAN, a matrix $\Delta^{q,k}$ may be formed from the feedback channel for antenna q from user k by calculating equation (5). Then using the *i*th diagonal element $\Delta^{q,k}[i, i]$, $M \times N$ auxiliary matrixes may be formed as follows:

$$\widetilde{H}_i = \begin{bmatrix} \Delta^{1,1}[i,i] & \Delta^{1,2}[i,i] & \cdots & \Delta^{1,K}[i,i] \\ \Delta^{2,1}[i,i] & \Delta^{2,2}[i,i] & \cdots & \Delta^{2,K}[i,i] \\ \vdots & \vdots & \ddots & \vdots \\ \Delta^{N_t,1}[i,i] & \Delta^{N_t,2}[i,i] & \cdots & \Delta^{N_t,K}[i,i] \end{bmatrix} \quad 1 \leq i \leq MN, \qquad (9)$$

where $\tilde{H}_i$ is a matrix of the size $N_t \times K$ defining a MIMO channel for each diagonal element of the channels. Using $\tilde{H}_i$, beamforming vectors may be formed in the DD domain for each diagonal element one by one. ZF or MMSE may be utilized to do this as follows:

$$\boldsymbol{\omega}_i^{MMSE} = \widetilde{H}_i^{\mathrm{H}}\left(\widetilde{H}_i\,\widetilde{H}_i^* + \frac{1}{\mathrm{SNR}}I_{N_t \times N_t}\right)^{-1}, \qquad (10)$$

$$\boldsymbol{\omega}_i^{ZF} = \widetilde{H}_i^*\left(\widetilde{H}_i\,\widetilde{H}_i^*\right)^{-1}, \qquad (11)$$

and using $\boldsymbol{\omega}_i^{ZF}$ the precoder matrices may be generated as follows:

$$F_{qk} = \Xi^{-1} \times \text{diag}(\omega_1^{ZF}[q,k], \omega_2^{ZF}[q,k], ..., \omega_{NM}^{ZF}[q,k]) \times \Xi. \qquad (12)$$

$F_{qk}$ may include the same structure as equation (3) and, therefore, may also be block circulant.

Using equation (2), the received signal at user k after applying the ZF precoder may be provided as:

$$Y_{DD}^k = \sum_{q=1}^{N_t} H_{DD}^{q,k} F_{qk} S_{DD}^k + Z^k. \qquad (13)$$

$\sum_{q=1}^{N_t} H_{DD}^{q,k} F_{qk} = H_{eff}^k$ may be a DBC matrix that can be considered as the effective channel between q-th transmit antenna and user-k after applying the precoder. Thus, $H_{eff}^k$ may be decomposed as $H_{eff}^k = \Xi^{-1} \Delta_{eff}^k \Xi$. To estimate the $\Delta_{eff}^k$ at a receiver device, the RAN may transmit preceded pilots for each user. Then the diagonal matrix $\Delta_{eff}^k$ may be estimated using equation (9). Then, the equalized symbols in the DD domain at user-k may be provided as:

$$\hat{S}_{DD}^k = \Xi^{-1} (\Delta_{eff}^k)^{-1} \Xi Y_{DD}^k. \qquad (14)$$

As further shown in Fig. 1D, and by reference number 115, the RAN may utilize a ZF and MMSE based precoder for MU-MIMO OTFS in a TF domain for a single-antenna receiver. For example, the RAN may utilize rectangular pulse shaping instead of ideal bi-orthogonal pulse shaping. In this case, the structure of $H_{DD}$ will be different from equation (8). The method of building up the $H_{DD}$ matrix for rectangular pulse shaping is described above. Accordingly, $H_{DD}$ may be provided in an explicit form as:

$$H_{DD} \triangleq \sum_{i=1}^{P} h_i (\mathbf{F}_N \otimes \mathbf{I}_M) \Pi^{l_i} \Delta^{k_i} (\mathbf{F}_N^* \otimes \mathbf{I}_M), \qquad (15)$$

where $\Pi$ is a permutation matrix with forward cyclic shift in the form:

$$\Pi = \begin{bmatrix} 0 & \cdots & 0 & 1 \\ 1 & \ddots & \vdots & 0 \\ \vdots & \ddots & \ddots & \vdots \\ 0 & \cdots & 1 & 0 \end{bmatrix}, \qquad (16)$$

and $\Delta = \text{diag}\{\gamma^0, \gamma^1, ..., \gamma^{MN-1}\}$ is a diagonal matrix with $\gamma \triangleq e^{\frac{j2\pi}{MN}}$. Also, $l_i$ and $k_i$ may be related to the delay and Doppler values if each path in the channel as:

$$\tau_i = \frac{l_i}{M\Delta f}, \quad \text{and } v_i = \frac{k_i}{NT}. \qquad (17)$$

$\mathbf{F}_N$ may be defined as an N-point discrete Fourier transform matrix of size $N \times N$ and $\mathbf{I}_M$ may be ab identity matrix of size $M \times M$ and '$\otimes$' operator may denote the Kronecker product. In some implementations, the RAN may utilize equation (15) to characterize the OTFS channel.

In some implementations, the RAN may generate MU-MIMO OTFS signals based on ZF and MMSE precoding techniques and where the DBC property of the channel is not available. In such cases, particularly when employing rectangular pulse shaping, the bi-orthogonality property may no longer be guaranteed, resulting in the channel matrix no longer satisfying the DBC property. In some implementations, the RAN may utilize an equivalent TF domain signal to facilitate precoder design in the DD domain.

In some implementations, the RAN may utilize channel state information at transmitter (CSIT) to calculate the channel response in the TF domain. A single impulse located at a particular location in the DD domain may be transmitted from each antenna of the RAN. Such a signal may be denoted as $S_{DD}[m, n]$, where $m \in \{0, ..., M - 1\}$ and $n \in \{0, ..., N - 1\}$. A location of the pilot may be selected to be in the middle of the grid to capture the effect of the equivalent channel and avoid the phase rotations happening at the edges of the grid. The transmitted signal in the TF domain may be calculated using the ISFFT of $S_{DD}$, as follows:

$$S_{TF} = ISFFT(S_{DD}). \qquad (18)$$

The estimated channel from $q$-th transmit antenna at user-$k$ may be denoted by $\widehat{H}_{DD}^{q,k} \in \mathbb{C}^{MN \times MN}$. Then, the RAN may obtain an estimate of the received signal from $q$-th transmit antenna at the user-$k$ as follows:

$$\widehat{R}_{DD}^{q,k} = \text{vec}_{M,N}^{-1}(\widehat{R}_{DD}^{q,k}) = \text{vec}_{M,N}^{-1}(\widehat{H}_{DD}^{q,k} S_{DD}), \qquad (19)$$

where $\widehat{R}_{DD}^{q,k} \in \mathbb{C}^{MN \times MN}$ and $\widehat{R}_{DD}^{q,k} \in \mathbb{C}^{MN \times 1}$. Therefore, the equivalent signal in the TF domain may be:

$$\widehat{R}_{TF}^{q,k} = ISSFT(\widehat{R}_{DD}^{q,k}) = ISSFT(\text{vec}_{M,N}^{-1}(\widehat{H}_{DD}^{q,k} S_{DD})). \qquad (20)$$

Thus, the transmitted signal and received signal estimate in the TF domain can be calculated at the RAN. By performing element-wise division, an approximate equivalent TF domain channel response may be provided as:

$$\widehat{H}_{TF}^{q,k} = \widehat{R}_{TF} \oslash S_{TF}, \qquad (21)$$

where '$\oslash$' stands for the element-wise division. $\widehat{H}_{TF}^{q,k} \in \mathbb{C}^{M \times N}$ may have smaller dimensions compared to the equivalent DD channel. However, the DD domain channel may be sparse, whereas the TF domain channel may not be sparse.

Now that the channels in the TF domain are known, different precoding techniques may be applied in a similar manner that is applied for OFDM. For each time-frequency bin of a TF resource, a matrix may be generated as follows:

$$\widetilde{H}_{m,n} = \begin{bmatrix} \widehat{H}_{TF}^{1,1}[m,n] & \cdots & \widehat{H}_{TF}^{1,K}[m,n] \\ \vdots & \ddots & \vdots \\ \widehat{H}_{TF}^{N_t,1}[m,n] & \cdots & \widehat{H}_{TF}^{N_t,K}[m,n] \end{bmatrix}. \qquad (22)$$

$M \times N$ such channel matrices may be formed with a size $N_t \times K$ for each matrix. The precoder in the TF domain may be calculated using MMSE and ZF techniques as follows:

$$\omega_{m,n}^{MMSE} = \widetilde{H}_{m,n}^{H} \left( \widetilde{H}_{m,n} \widetilde{H}_{m,n}^{*} + \frac{1}{\text{SNR}} I_{N_t \times N_t} \right)^{-1}, \qquad (23)$$

$$\omega_{m,n}^{ZF} = \widetilde{H}_{m,n}^{*} \left( \widetilde{H}_{m,n} \widetilde{H}_{m,n}^{*} \right)^{-1}, \qquad (24)$$

respectively, where $\omega_{m,n}^{ZF} \in \mathbb{C}^{N_t \times K}$ or $\omega_{m,n}^{MMSE} \in \mathbb{C}^{N_t \times K}$ denote the beamforming coefficients applied to the $[m, n]$th bin of the data grid of each user in the TF domain which is transmitted from each antenna. For these calculations, the size of the matrix inversion involved may be proportional to the size of the transmitter antennas and, therefore, may be similar to the precoding schemes for OFDM. In order to reduce the calculations further, the beamformers may be calculated with a reduced granularity. By stacking the related beamforming coefficients of each antenna and user in a separate matrix of size $M \times N$, may result in:

$$W_{qk} = \begin{bmatrix} \omega_{1,1}[q,k] & \cdots & \omega_{1,N}[q,k] \\ \vdots & \ddots & \vdots \\ \omega_{M,1}[q,k] & \cdots & \omega_{M,N}[q,k] \end{bmatrix} \quad q \in \{1, \dots, N_t\}, \; k \in \{1, \dots, K\}, \qquad (25)$$

where the superscripts of "*ZF*" and "*MMSE*" have been removed for simplicity. Using equation (25), $N_t \times K$ beamforming matrixes may be generated and may be incorporated into the precoding network in the TF domain. To apply this precoder to the signal in the time domain, a Hadamard product of the precoding matrices may be applied to the TF domain signal $\mathbf{X}_{TF}$, and the signal may be converted to the time domain and transmitted by the RAN.

In some implementations, the calculated beamforming vectors may be transformed into the DD domain. This may enable the RAN to directly apply the beamforming vectors in the DD domain. The multiplication of the beamforming coefficients in the TF domain may be the same as applying a filter to the signal or equivalently passing the signal through a channel. To calculate the channel response of the calculated precoders in the DD domain, an impulse pilot may be utilized. Therefore, to identify the impulse response of the channel in the DD domain, an impulse pilot may be utilized in the DD domain and the effect of the precoders on the impulse pilot may be calculated.

The effect of the beamformer matrixes $\mathbf{W}_{qk}$ on the pilot signal in the TF domain may be approximately calculated by Hadamard multiplication of $\mathbf{S}_{TF}$ and $\mathbf{W}_{qk}$. By applying the SFFT to the result, the impulse response of the beamformers in the DD domain may be calculated as follows:

$$\mathbf{f}_{qk} = SFFT(\mathbf{S}_{TF} \odot \mathbf{W}_{qk}). \qquad (26)$$

In equation (26), $\mathbf{f}_{qk} \in \mathbb{C}^{M \times N}$ may be the equivalent DD domain impulse response of the beamforming vector $\mathbf{W}_{qk}$ on the impulse pilot $\mathbf{S}_{TF}$ and '$\odot$' may represent the Hadamard product operation. $f_{qk,i}$ may be defined as the non-zero elements of $\mathbf{f}_{qk}$ for $i \in \{0,1, ..., V\}$ and $\alpha_i$ and $\beta_i$ may be the corresponding delay and Doppler bins. Therefore, employing the identical procedure as in equation (15), an equivalent precoding matrix $\mathbf{F}_{qk}$ may be generated from the calculated impulse response $\mathbf{f}_{qk}$ as follows:

$$\mathbf{F}_{qk} \triangleq \sum_{i=1}^{V} f_{qk,i}(\mathbf{F}_N \otimes \mathbf{I}_M)\mathbf{\Pi}^{\alpha_i}\mathbf{\Delta}^{\beta_i}(\mathbf{F}_N^* \otimes \mathbf{I}_M). \qquad (27)$$

As further shown in Fig. 1D, and by reference number 120, the RAN may utilize a block diagonalization (BD) based precoder for MU-MIMO OTFS in a TF domain for a multi-antenna receiver. For example, the methodology described above may be extended to almost all beamforming methods associated with OFDM systems. In some implementations, where users are equipped with $N_r$ antennas, BD precoding may be applied, which is an extension of ZF to the multi-antenna receivers. Assuming the presence of the CSI at the RAN, the TF domain channel matrix of equation (22) may be written as a 3D matrix with $\widetilde{\mathbf{H}}_{m,n} \in \mathbb{C}^{N_t \times N_r \times K}$. After calculating the beamforming vectors in the TF, the remaining operations are identical to the operations described above.

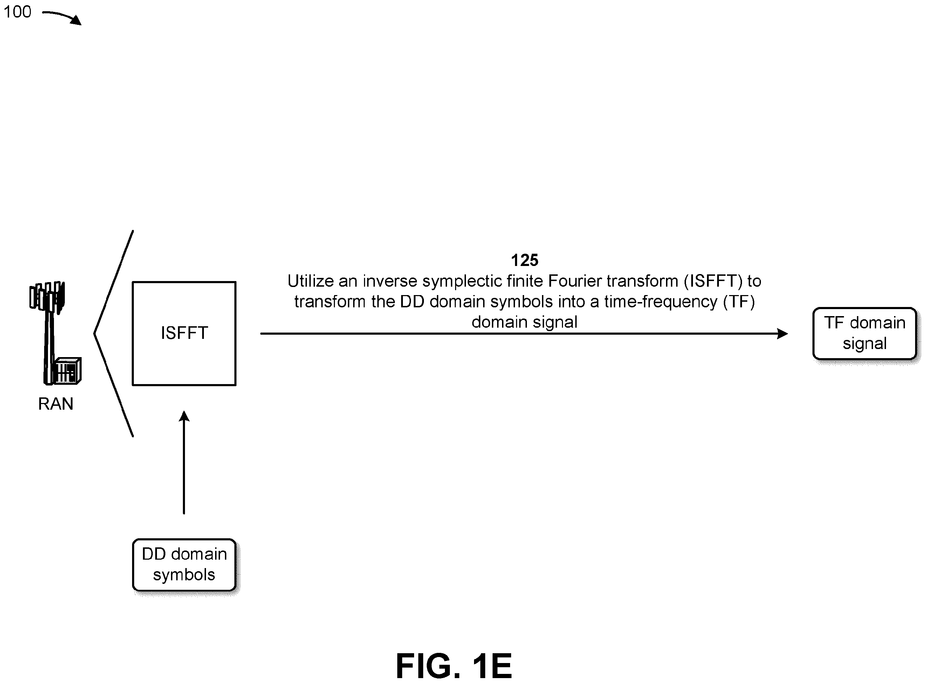

As shown in Fig. 1E, and by reference number 125, the RAN may utilize an ISFFT to transform the DD domain symbols into a TF domain signal. For example, the RAN may transform the DD domain symbols $\mathbf{X}_{DD}[l',k']$ into a TF domain signal $\mathbf{X}_{TF}[m, n]$ via the ISFFT:

$$\mathbf{X}_{TF}[m, n] = \frac{1}{\sqrt{MN}} \sum_{k'=0}^{N-1} \sum_{l'=0}^{M-1} \mathbf{X}_{DD}[l', k'] e^{j2\pi\left(\frac{nk'}{N} - \frac{ml'}{M}\right)}, \qquad (28)$$

where $m \in \{0, ..., M$ - $1\}$ and $n \in \{0, ..., N$ - $1\}$. At this stage, m may indicate a subcarrier index and $n$ may represent a slot number.

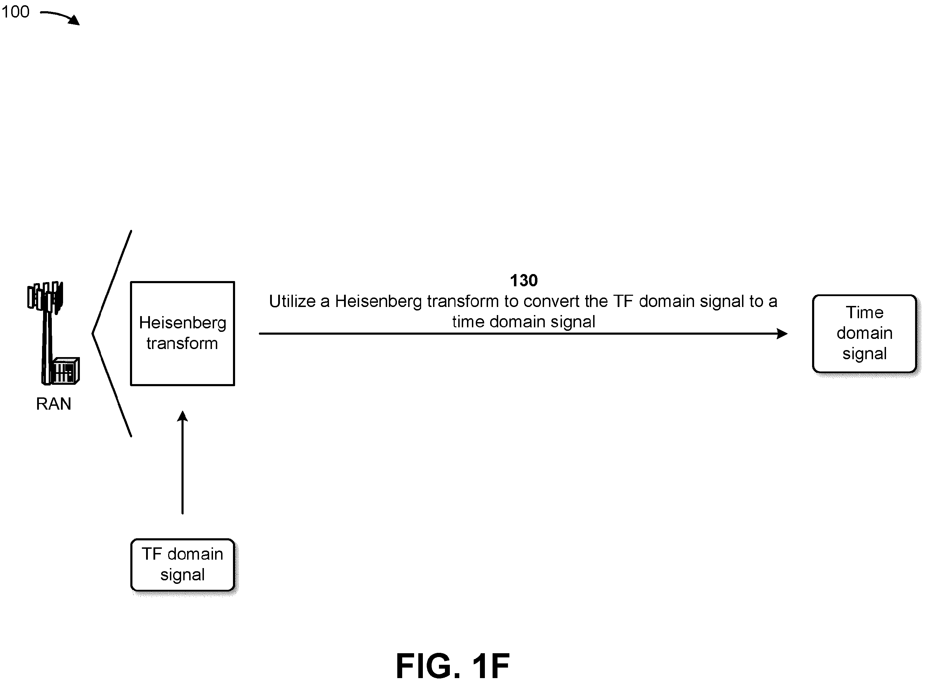

As shown in Fig. 1F, and by reference number 130, the RAN may utilize a Heisenberg transform to convert the TF domain signal to a time domain signal. For example, the RAN may apply the Heisenberg transform to the TF domain signal in order to convert the TF domain signal to the time domain signal. In some implementations, the transformation may include an OFDM transformation, as follows:

$$s(t) = \frac{1}{\sqrt{MN}} \sum_{n=0}^{N-1} \sum_{m=0}^{M-1} \mathbf{X}_{TF}[m, n] g_{tx}(t - NT)e^{j2\pi m\Delta f(t-NT)}, \qquad (29)$$

where $g_{tx}(t)$ is a transmitter pulse shaping filter. Different methods may be utilized to implement the pulse shaping filter, which may impact the performance of the precoding method. In some implementations, the pulse shaping may cause doubly block circulant channel matrices to be generated. In some implementations, a rectangular windowing at the transmitter and receiver side may be utilized. For the rectangular pulse shaping, the $g_{tx}(t)$ in equation (29) may be defined as:

$$g_{tx}(t) \triangleq \begin{cases} \frac{1}{\sqrt{T}}, & 0 < t < T \\ 0, & \text{otherwise.} \end{cases} \quad (30)$$

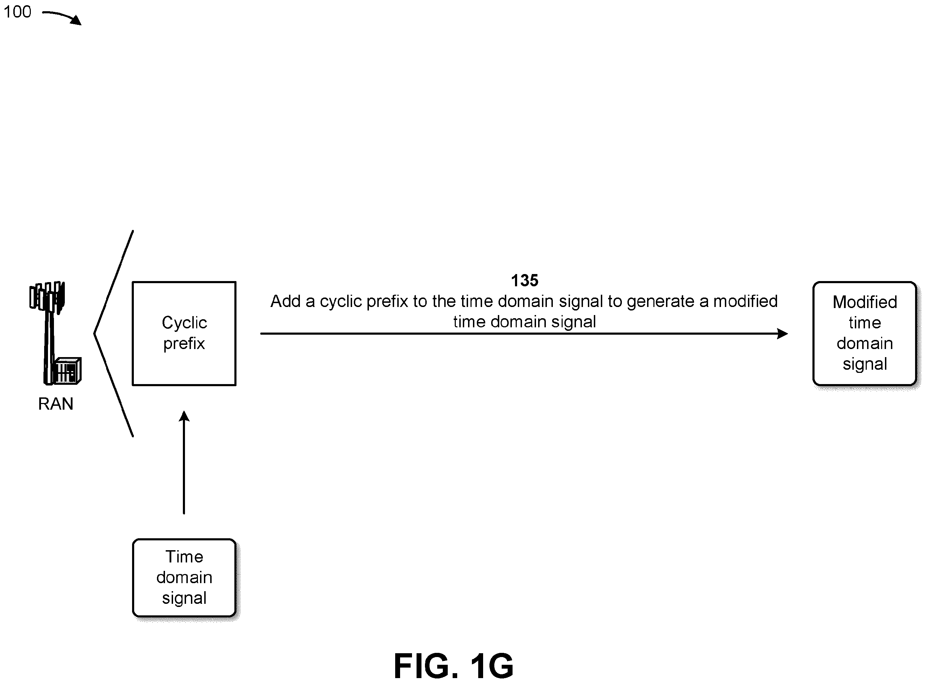

As shown in Fig. 1G, and by reference number 135, the RAN may add a cyclic prefix to the time domain signal to generate a modified time domain signal. For example, the RAN may add a cyclic prefix to the time domain signal to generate a time domain signal with a cyclic prefix (e.g., referred to herein as the modified time domain signal). A choice of where to add the cyclic prefix may impact the equivalent channel matrix structure in the DD domain. Thus, the quantity of the resources dedicated to the cyclic prefix may be reduced.

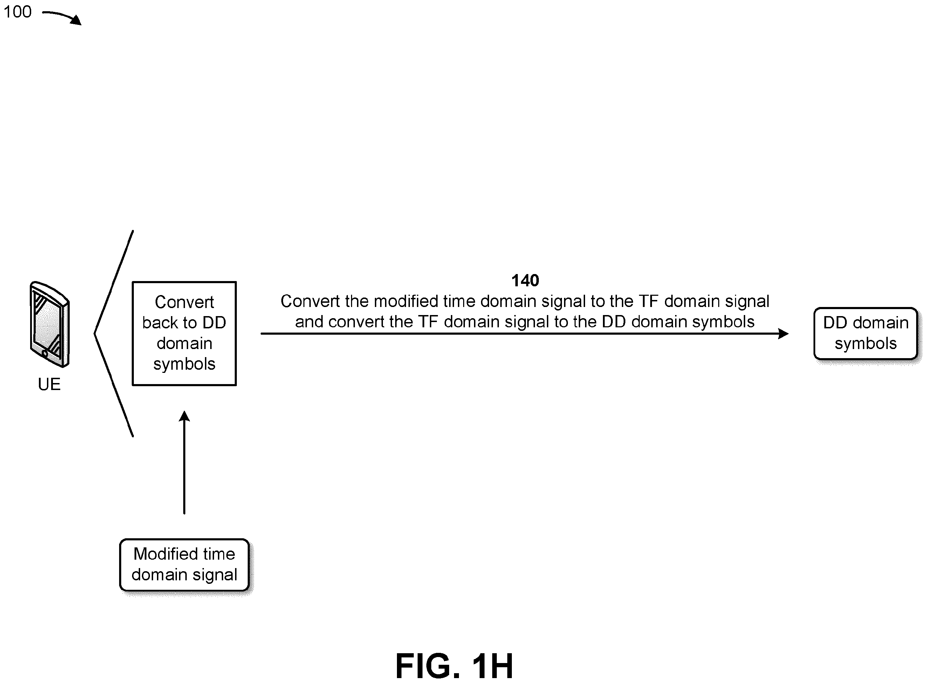

As shown in Fig. 1H, and by reference number 140, the UE may convert the modified time domain signal to the TF domain signal and may convert the TF domain signal to the DD domain symbols. For example, the RAN may transmit the modified time domain signal to one of the UEs, and the UE may receive the modified time domain signal. At the receiver (e.g., the UE), the reverse procedure may be applied. First the UE may apply a windowing function to the modified time domain signal and may utilize a Wigner transform to convert the modified time domain signal to the TF domain signal. The UE may utilize an SFFT to convert the TF domain signal back to the DD domain symbols. The UE may perform equalization and signal detection based on the DD domain symbols.

In this way, the RAN applies ZF and MMSE to MU-MIMO OTFS networks. For example, a RAN may apply ZF and/or MMSE models to beamforming techniques for MU-MIMO OTFS systems. Although the models are described in connection with MU-MIMO, the models may also be used in SU-MIMO OTFS. In a ZF precoding scheme for OTFS, a precoder for each antenna and each user may be designed to cancel out total interference to the other users. An MMSE precoder for OTFS may incorporate benefits of MRT and ZF precoding schemes considering both signal and interference levels to achieve a robust performance. A transformation may be utilized to diagonalize an effective channel matrix of the system, and a precoding design may be performed accordingly. Alternatively, beamformers may be calculated and applied in the TF domain rather than the DD domain. Thus, the RAN conserves computing resources, networking resources, and/or the like that would otherwise have been consumed by increasing power consumption, reducing battery life, handling inter-carrier interference, reducing spectral efficiency, generating a degraded quality signal, and/or the like.

As indicated above, Figs. 1A-1H are provided as an example. Other examples may differ from what is described with regard to Figs. 1A-1H. The number and arrangement of devices shown in Figs. 1A-1H are provided as an example. In practice, there may be additional devices, fewer devices, different devices, or differently arranged devices than those shown in Figs. 1A-1H. Furthermore, two or more devices shown in Figs. 1A-1H may be implemented within a single device, or a single device shown in Figs. 1A-1H may be implemented as multiple, distributed devices. Additionally, or alternatively, a set of devices (e.g., one or more devices) shown in Figs. 1A-1H may perform one or more functions described as being performed by another set of devices shown in Figs. 1A-1H.

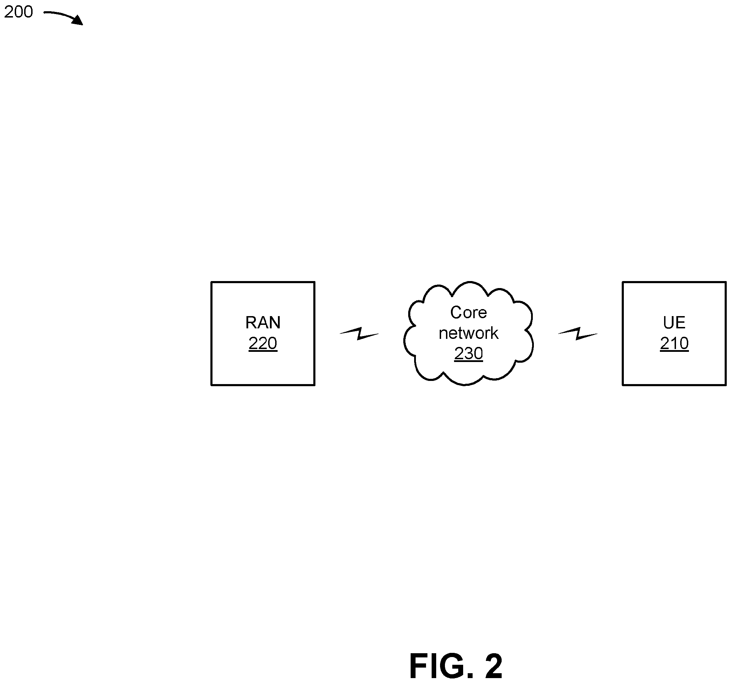

Fig. 2 is a diagram of an example environment 200 in which systems and/or methods described herein may be implemented. As shown in Fig. 2, the environment 200 may include a UE 210, a RAN 220, and/or a core network 230. Devices and/or elements of the environment 200 may interconnect via wired connections and/or wireless connections.

The UE 210 includes one or more devices capable of receiving, generating, storing, processing, and/or providing information, such as information described herein. For example, the UE 210 can include a mobile phone (e.g., a smart phone or a radiotelephone), a laptop computer, a tablet computer, a desktop computer, a handheld computer, a gaming device, a wearable communication device (e.g., a smart watch or a pair of smart glasses), a mobile hotspot device, a fixed wireless access device, customer premises equipment, an autonomous vehicle, or a similar type of device.

The RAN 220 may support, for example, a cellular radio access technology (RAT). The RAN 220 may include one or more base stations (e.g., base transceiver stations, radio base stations, node Bs, eNodeBs (eNBs), gNodeBs (gNBs), base station subsystems, cellular sites, cellular towers, access points, transmit receive points (TRPs), radio access nodes, macrocell base stations, microcell base stations, picocell base stations, femtocell base stations, or similar types of devices) and other network entities that can support wireless communication for the UE 210. The RAN 220 may transfer traffic between the UE 210 (e.g., using a cellular RAT), one or more base stations (e.g., using a wireless interface or a backhaul interface, such as a wired backhaul interface), and/or the core network 230. The RAN 220 may provide one or more cells that cover geographic areas.

In some implementations, the RAN 220 may perform scheduling and/or resource management for the UE 210 covered by the RAN 220 (e.g., the UE 210 covered by a cell provided by the RAN 220). In some implementations, the RAN 220 may be controlled or coordinated by a network controller, which may perform load balancing, network-level configuration, and/or other operations. The network controller may communicate with the RAN 220 via a wireless or wireline backhaul. In some implementations, the RAN 220 may include a network controller, a self-organizing network (SON) module or component, or a similar module or component. In other words, the RAN 220 may perform network control, scheduling, and/or network management functions (e.g., for uplink, downlink, and/or sidelink communications of the UE 210 covered by the RAN 220).

In some implementations, the core network 230 may include an example functional architecture in which systems and/or methods described herein may be implemented. For example, the core network 230 may include an example architecture of a fifth generation (5G) next generation (NG) core network included in a 5G wireless telecommunications system, a sixth generation (6G) core network included in a 6G wireless telecommunications system, and/or the like. While the example architecture of the core network 230 shown in Fig. 2 may be an example of a service-based architecture, in some implementations, the core network 230 may be implemented as a reference-point architecture and/or a fourth generation (4G) core network, among other examples.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

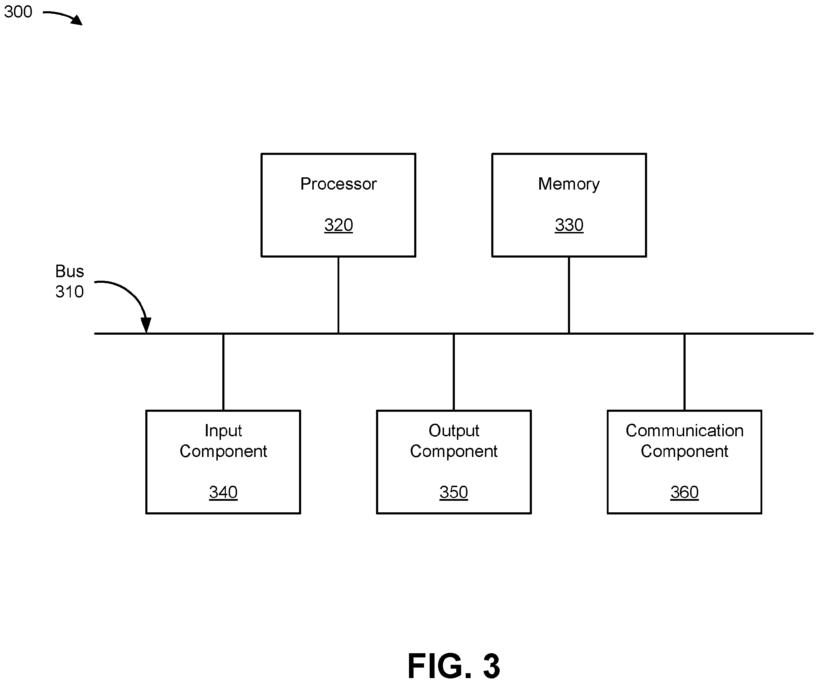

Fig. 3 is a diagram of example components of a device 300, which may correspond to the UE 210 and/or the RAN 220. In some implementations, the UE 210 and/or the RAN 220 may include one or more devices 300 and/or one or more components of the device 300. As shown in Fig. 3, the device 300 may include a bus 310, a processor 320, a memory 330, an input component 340, an output component 350, and a communication component 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit, a graphics processing unit, a microprocessor, a controller, a microcontroller, a digital signal processor, a field-programmable gate array, an application-specific integrated circuit, and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

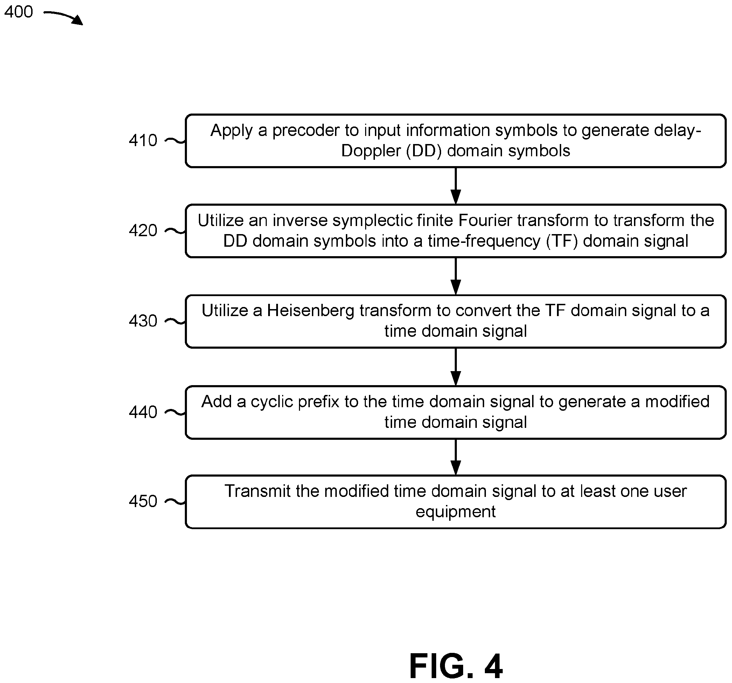

Fig. 4 is a flowchart of an example process 400 for applying ZF and MMSE to MU-MIMO OTFS networks. In some implementations, one or more process blocks of Fig. 4 may be performed by a device (e.g., the RAN 220). In some implementations, one or more process blocks of Fig. 4 may be performed by another device or a group of devices separate from or including the device, such as a UE (e.g., the UE 210). Additionally, or alternatively, one or more process blocks of Fig. 4 may be performed by one or more components of the device 300, such as the processor 320, the memory 330, the input component 340, the output component 350, and/or the communication component 360.

As shown in Fig. 4, process 400 may include applying a precoder to input information symbols to generate delay-Doppler (DD) domain symbols (block 410). For example, the device may apply a precoder to input information symbols to generate delay-Doppler (DD) domain symbols, as described above. In some implementations, the precoder is a zero forcing and minimum mean square error based precoder for multi-user multi-input multi-output orthogonal time and frequency space in a DD domain based on a doubly block circulant property of a channel matrix. In some implementations, the precoder is a zero forcing and minimum mean square error based precoder for multi-user multi-input multi-output orthogonal time and frequency space in a time-frequency domain for a single-antenna receiver. In some implementations, process 400 includes converting the zero forcing and minimum mean square error based precoder to a DD domain.

In some implementations, the precoder is a block diagonalization based precoder for multi-user multi-input multi-output orthogonal time and frequency space in a time-frequency domain for a multi-antenna receiver. In some implementations, process 400 includes converting the block diagonalization based precoder to a DD domain.

In some implementations, the device is a radio access network. In some implementations, the precoder provides a zero forcing precoding scheme. In some implementations, the precoder provides a minimum mean square error precoding scheme. In some implementations, the minimum mean square error precoding scheme includes a zero forcing precoding scheme and a maximum ratio transmission precoding scheme. In some implementations, the device is a multi-user multi-input multi-output (MIMO) orthogonal time and frequency space (OTFS) system or a single-user MIMO OTFS system.

As further shown in Fig. 4, process 400 may include utilizing an inverse symplectic finite Fourier transform to transform the DD domain symbols into a time-frequency (TF) domain signal (block 420). For example, the device may utilize an inverse symplectic finite Fourier transform to transform the DD domain symbols into a time-frequency (TF) domain signal, as described above.

As further shown in Fig. 4, process 400 may include utilizing a Heisenberg transform to convert the TF domain signal to a time domain signal (block 430). For example, the device may utilize a Heisenberg transform to convert the TF domain signal to a time domain signal, as described above. In some implementations, the inverse symplectic finite Fourier transform and the Heisenberg transform are provided in an orthogonal time and frequency space modulator of the device.

As further shown in Fig. 4, process 400 may include adding a cyclic prefix to the time domain signal to generate a modified time domain signal (block 440). For example, the device may add a cyclic prefix to the time domain signal to generate a modified time domain signal, as described above.

As further shown in Fig. 4, process 400 may include transmitting the modified time domain signal to at least one user equipment (block 450). For example, the device may transmit the modified time domain signal to at least one UE, as described above. In some implementations, transmitting the modified time domain signal causes the at least one UE to convert the modified time domain signal to the TF domain signal and to convert the TF domain signal to the DD domain symbols.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

## Claims

1. A method, comprising:

    applying, by a device, a precoder to input information symbols to generate delay-Doppler, DD, domain symbols;
    utilizing, by the device, an inverse symplectic finite Fourier transform to transform the DD domain symbols into a time-frequency, TF, domain signal;
    utilizing, by the device, a Heisenberg transform to convert the TF domain signal to a time domain signal;
    adding, by the device, a cyclic prefix to the time domain signal to generate a modified time domain signal; and
    transmitting, by the device, the modified time domain signal to at least one user equipment.

2. The method of claim 1, wherein transmitting the modified time domain signal causes the at least one user equipment to convert the modified time domain signal to the TF domain signal and to convert the TF domain signal to the DD domain symbols.

3. The method of claim 1 or claim 2, wherein the precoder is a zero forcing and minimum mean square error based precoder for multi-user multi-input multi-output orthogonal time and frequency space in a DD domain based on a doubly block circulant property of a channel matrix.

4. The method of claim 1 or claim 2, wherein the precoder is a zero forcing and minimum mean square error based precoder for multi-user multi-input multi-output orthogonal time and frequency space in a time-frequency domain for a single-antenna receiver.

5. The method of claim 4, further comprising:
    converting the zero forcing and minimum mean square error based precoder to a DD domain.

6. The method of any preceding claim, wherein the precoder is a block diagonalization based precoder for multi-user multi-input multi-output orthogonal time and frequency space in a time-frequency domain for a multi-antenna receiver.

7. The method of claim 6, further comprising:
    converting the block diagonalization based precoder to a DD domain.

8. A non-transitory computer-readable medium storing a set of instructions, the set of instructions comprising one or more instructions that, when executed by one or more processors of a device, cause the device to perform the method of any preceding claim.

9. The non-transitory computer-readable medium of claim 8, wherein the inverse symplectic finite Fourier transform and the Heisenberg transform are provided in an orthogonal time and frequency space modulator of the device.

10. A device, comprising:

    one or more memories; and
    one or more processors, coupled to the one or more memories, configured to:

apply a precoder to input information symbols to generate delay-Doppler, DD, domain symbols;
utilize an inverse symplectic finite Fourier transform to transform the DD domain symbols into a time-frequency, TF, domain signal;
utilize a Heisenberg transform to convert the TF domain signal to a time domain signal;
add a cyclic prefix to the time domain signal to generate a modified time domain signal; and
transmit the modified time domain signal to at least one user equipment to cause the at least one user equipment to convert the modified time domain signal to the TF domain signal and to convert the TF domain signal to the DD domain symbols.

11. The device of claim 10, wherein the inverse symplectic finite Fourier transform and the Heisenberg transform are provided in an orthogonal time and frequency space modulator of the device.

12. The device of claim 10 or claim 11, wherein the device is a radio access network.

13. The device of any of claims 10 to 12, wherein the precoder provides a zero forcing precoding scheme.

14. The device of any of claims 10 to 12, wherein the precoder provides a minimum mean square error precoding scheme, and optionally wherein the minimum mean square error precoding scheme includes a zero forcing precoding scheme and a maximum ratio transmission precoding scheme.

15. The device of any of claims 10 to 14, wherein the device is a multi-user multi-input multi-output, MIMO, orthogonal time and frequency space, OTFS, system or a single-user MIMO OTFS system.

FIG. 1A

FIG. 1B

FIG. 1C

100 —▶

**110**
Utilize a zero-forcing (ZF) and minimum mean square error (MMSE)-based precoder for MU-MIMO OTFS in a DD domain based on a doubly block circulant (DBC) property of a channel matrix

ZF and MMSE-based

**115**
Utilize a ZF and MMSE-based precoder for MU-MIMO OTFS in a TF domain for a single-antenna receiver

ZF and MMSE-based

RAN — Precoder

**120**
Utilize a block diagonalization (BD)-based precoder for MU-MIMO OTFS in a TF domain for a multi-antenna receiver

BD-based

**FIG. 1D**

EP 4 607 863 A1

**125**
Utilize an inverse symplectic finite Fourier transform (ISFFT) to transform the DD domain symbols into a time-frequency (TF) domain signal

RAN

ISFFT

DD domain symbols

TF domain signal

**FIG. 1E**

100

EP 4 607 863 A1

RAN

Heisenberg
transform

**130**
Utilize a Heisenberg transform to convert the TF domain signal to a
time domain signal

Time
domain
signal

TF domain
signal

EP 4 607 863 A1

**FIG. 1F**

FIG. 1G

EP 4 607 863 A1

100

Convert back to DD domain symbols

UE

**140**
Convert the modified time domain signal to the TF domain signal
and convert the TF domain signal to the DD domain symbols

DD domain symbols

Modified time domain signal

# FIG. 1H

FIG. 2

300

Processor

320

Memory

330

Bus
310

Input
Component

340

Output
Component

350

Communication
Component

360

**FIG. 3**

400

410 ~ Apply a precoder to input information symbols to generate delay-Doppler (DD) domain symbols

420 ~ Utilize an inverse symplectic finite Fourier transform to transform the DD domain symbols into a time-frequency (TF) domain signal

430 ~ Utilize a Heisenberg transform to convert the TF domain signal to a time domain signal

440 ~ Add a cyclic prefix to the time domain signal to generate a modified time domain signal

450 ~ Transmit the modified time domain signal to at least one user equipment

**FIG. 4**

Europäisches
Patentamt

European
Patent Office

Office européen
des brevets

## EUROPEAN SEARCH REPORT

**Application Number**

EP 25 15 6192

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAO BOHAO ET AL: "Low complexity transmitter precoding for MU MIMO-OTFS", DIGITAL SIGNAL PROCESSING, ACADEMIC PRESS, ORLANDO,FL, US, vol. 115, 28 April 2021 (2021-04-28), XP086596797, ISSN: 1051-2004, DOI: 10.1016/J.DSP.2021.103083 [retrieved on 2021-04-28] * Sections 2. and 3. * | 1-15 | INV. H04L25/03 H04B7/0456 H04L27/26 |
| X | YAN YIPAI ET AL: "Low-complexity OTFS-based hybrid precoding in mmWave high mobility systems", DIGITAL SIGNAL PROCESSING, ACADEMIC PRESS, ORLANDO,FL, US, vol. 126, 1 March 2022 (2022-03-01), XP087062504, ISSN: 1051-2004, DOI: 10.1016/J.DSP.2022.103496 [retrieved on 2022-03-01] * Sections 2. and 3. * | 1-15 | |
| X | PANDEY BRIJESH CHANDER ET AL: "Low Complexity Precoding and Detection in Multi-User Massive MIMO OTFS Downlink", IEEE TRANSACTIONS ON VEHICULAR TECHNOLOGY, IEEE, USA, vol. 70, no. 5, 24 February 2021 (2021-02-24), pages 4389-4405, XP011859249, ISSN: 0018-9545, DOI: 10.1109/TVT.2021.3061694 [retrieved on 2021-06-08] * figures 1, 2 * * Sections III. and IV. * | 1,2,4,5, 8-12,15 | TECHNICAL FIELDS SEARCHED (IPC) H04L H04B |

-/--

The present search report has been drawn up for all claims

| Place of search | Date of completion of the search | Examiner |
|---|---|---|
| Berlin | 2 July 2025 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
....................................................................
& : member of the same patent family, corresponding document

EPO FORM 1503 03.82 (P04C01)

Europäisches Patentamt
European Patent Office
Office européen des brevets

**EUROPEAN SEARCH REPORT**

Application Number

EP 25 15 6192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONG WANG ET AL: "Orthogonal Time Frequency Space Modulation in Multiple-Antenna Systems", ZTE COMMUNICATIONS, vol. 19, no. 4, 1 December 2021 (2021-12-01), pages 71-78, XP093291698, CN ISSN: 1673-5188, DOI: 10.12142/ZTECOM.202104008 * Sections 2. and 3. * | 1,2,4,5, 8-12,15 | |
| X,P | ZHOU DONGKAI ET AL: "OTFS-Based Robust MMSE Precoding Design in Over-the-Air Computation", IEEE TRANSACTIONS ON VEHICULAR TECHNOLOGY, vol. 73, no. 9, 1 September 2024 (2024-09-01), pages 13932-13937, XP093291711, USA ISSN: 0018-9545, DOI: 10.1109/TVT.2024.3385445 * Sections II. and III. * | 1,2,4,5, 8-12,15 | TECHNICAL FIELDS SEARCHED (IPC) |

The present search report has been drawn up for all claims

| Place of search | Date of completion of the search | Examiner |
|---|---|---|
| Berlin | 2 July 2025 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)